# EUROPEAN PATENT APPLICATION

(11) **EP 4 779 571 A1**
(43) Date of publication of application: **22.07.2026**
(21) Application number: 24882687.7
(22) Date of filing: 02.10.2024
(51) Int. Cl.: G06T 11/60, G10L 15/26, G10L 15/18, G06F 3/04895, G06F 40/279, G10L 25/63, G06N 3/08

(54) **ELECTRONIC DEVICE AND IMAGE GENERATION METHOD BASED ON SPEECH DATA USING SAME**

(30) Priority: 24.10.2023 KR 20230143090; 26.12.2023 KR 20230190955
(71) Applicant: Samsung Electronics Co., Ltd., Suwon-si, Gyeonggi-do 16677 (KR)
(72) Inventor: MUN, Jihun, Suwon-si, Gyeonggi-do 16677 (KR); KIM, Sungtae, Suwon-si, Gyeonggi-do 16677 (KR); PARK, Jiyoon, Suwon-si, Gyeonggi-do 16677 (KR); YOO, Nagyeom, Suwon-si, Gyeonggi-do 16677 (KR); HYUN, Daeyoung, Suwon-si, Gyeonggi-do 16677 (KR)
(74) Representative: Gulde & Partner
(86) International application number: PCT/KR2024/015016
(87) International publication number: WO 2025/089659

(57) **Abstract**

According to an embodiment of the present disclosure, an electronic device may comprise: a processor; and a memory that stores instructions. According to an embodiment, the instructions, when executed by the processor, may cause the electronic device to convert speech data related to a conversation between a plurality of interlocutors into text data. According to an embodiment, the instructions, when executed by the processor, may cause the electronic device to analyze, on the basis of the converted text data, context information regarding the conversation, which includes at least one of information related to a topic of the conversation, information related to the degree of understanding of the plurality of interlocutors with respect to the conversation, and information related to emotions of the conversation. According to an embodiment, the instructions, when executed by the processor, may cause the electronic device to generate at least one prompt on the basis of the analyzed context information regarding the conversation. According to an embodiment, the instructions, when executed by the processor, may cause the electronic device to generate, on the basis of the generated at least one prompt, a plurality of images including at least one of at least one first object indicating the plurality of interlocutors and at least one second object indicating the content of the conversation. According to an embodiment, the instructions, when executed by the processor, may cause the electronic device to generate an image related to the conversation on the basis of the generated plurality of images. In addition to various embodiments disclosed in the present document, various other embodiments are possible..

## Description

### [Technical Field]

Embodiments of the disclosure relate to an electronic device and a method for generating an image, based on voice data, by using same.

### [Background Art]

As various electronic devices such as smart phones, tablet PCs, laptop personal computers, and wearable electronic devices have been widely distributed, various functions using the electronic devices may be provided. For example, the electronic device may provide functions related to audio signal processing. The functions related to audio signal processing may include a recording function for recording audio signals. For example, a user of the electronic device may record an audio signal related to a conversation and/or a meeting with a particular user. In addition, the electronic device may recognize the recorded audio signal as text, and search for an image related to the text. For example, the electronic device may recognize the intention of the conversation and/or meeting content, based on the recognized text, and search for an image corresponding to the recognized intention, and provide the image to the user.

The information described above may be provided as related art to facilitate an understanding of the disclosure. None of the above-described content is asserted or determined to be applicable as prior art related to the disclosure.

### [Disclosure of Invention]

### [Technical Problem]

However, when an image related to the text is not retrieved, an image that does not correspond to the intention of the conversation content and/or the meeting content may be provided.

An electronic device according to an embodiment of the disclosure may convert audio data into text data, and may analyze context information of a conversation, based on the converted text data. The electronic device according to an embodiment may generate a plurality of images including at least one object representing a plurality of speakers (e.g., a plurality of participants) and/or the content of the conversation, based on the analyzed context information of the conversation, and may generate an image related to the conversation based thereon.

### [Solution to Problem]

According to an embodiment of the disclosure, an electronic device may include a processor and a memory storing instructions. According to an embodiment, the instructions, when executed by the processor, may cause the electronic device to convert voice data related to a conversation of a plurality of speakers into text data. According to an embodiment, the instructions, when executed by the processor, may cause the electronic device to analyze, based on the converted text data, context information of the conversation, the context information including at least one of information related to a topic of the conversation, information related to understanding of the plurality of speakers for the conversation, or information related to mood of the conversation. According to an embodiment, the instructions, when executed by the processor, may cause the electronic device to generate at least one prompt, based on the analyzed context information of the conversation. According to an embodiment, the instructions, when executed by the processor, may cause the electronic device to generate, based on the generated at least one prompt, a plurality of images including at least one of at least one first object indicating the plurality of speakers or at least one second object indicating content of the conversation. According to an embodiment, the instructions, when executed by the processor, may cause the electronic device to generate an image related to the conversation, based on the generated plurality of images.

According to an embodiment of the present disclosure, a method for generating an image, based on voice data, using an electronic device may include converting voice data related to a conversation of a plurality of speakers into text data. According to an embodiment, the method for generating an image, based on voice data, using an electronic device may include analyzing, based on the converted text data, context information of the conversation, the context information including at least one of information related to a topic of the conversation, information related to understanding of the plurality of speakers for the conversation, or information related to mood of the conversation. According to an embodiment, the method for generating an image, based on voice data, using an electronic device may include generating at least one prompt, based on the analyzed context information of the conversation. According to an embodiment, the method for generating an image, based on voice data, using an electronic device may include generating, based on the generated at least one prompt, a plurality of images including at least one of at least one first object indicating the plurality of speakers or at least one second object indicating content of the conversation. According to an embodiment, the method for generating an image, based on voice data, using an electronic device may include generating an image related to the conversation, based on the generated plurality of images.

According to an embodiment of the present disclosure, a non-transitory computer-readable storage medium (or a computer program product) for storing one or more programs may be described. According to an embodiment, the one or more programs may include instructions which, when executed by a processor of an electronic device, cause the processor to convert voice data related to a conversation of a plurality of speakers into text data. According to an embodiment, the one or more programs may include instructions which, when executed by the processor of the electronic device, cause the processor to analyze, based on the converted text data, context information of the conversation, the context information including at least one of information related to a topic of the conversation, information related to understanding of the plurality of speakers for the conversation, or information related to mood of the conversation. According to an embodiment, the one or more programs may include instructions which, when executed by the processor of the electronic device, cause the processor to generate at least one prompt, based on the analyzed context information of the conversation. According to an embodiment, the one or more programs may include instructions which, when executed by the processor of the electronic device, cause the processor to generate, based on the generated at least one prompt, a plurality of images including at least one of at least one first object indicating the plurality of speakers or at least one second object indicating content of the conversation. According to an embodiment, the one or more programs may include instructions which, when executed by the processor of the electronic device, cause the processor to generate an image related to the conversation, based on the generated plurality of images.

### [Advantageous Effects of Invention]

According to an embodiment of the disclosure, the electronic device may generate an image related to a conversation, based on a plurality of images generated based on the analyzed context information of the conversation, thereby eliminating the need to search for images corresponding to the intention of the conversation, and also eliminating the need for a database used for such searching. In addition, the electronic device may generate an image representing content of a conversation over time, based on a plurality of images generated based on the analyzed context information of the conversation, thereby not only helping to prevent a user's memory from being distorted but also improving understanding of the conversation content.

### [Brief Description of Drawings]

FIG. 1 is a block diagram of an electronic device in a network environment according to an embodiment of the disclosure.
FIG. 2 is a block diagram illustrating an electronic device according to an embodiment of the disclosure.
FIG. 3 is a flowchart illustrating a method of generating an image, based on voice data related to a conversation, according to an embodiment of the disclosure.
FIG. 4 is a flowchart illustrating a method of generating an image, based on voice data related to a conversation, according to an embodiment of the disclosure.
FIG. 5 is a flowchart illustrating a method of generating an image, based on voice data related to a conversation, according to an embodiment of the disclosure.
FIG. 6A is a flowchart illustrating a method of generating an image, based on voice data related to a conversation of a user of an electronic device, according to an embodiment of the disclosure.
FIG. 6B is a flowchart illustrating a method of modifying an image related to a conversation of a user of an electronic device, according to an embodiment of the disclosure.
FIG. 7 schematically illustrates a method of generating an image, based on voice data related to a conversation, according to an embodiment of the disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

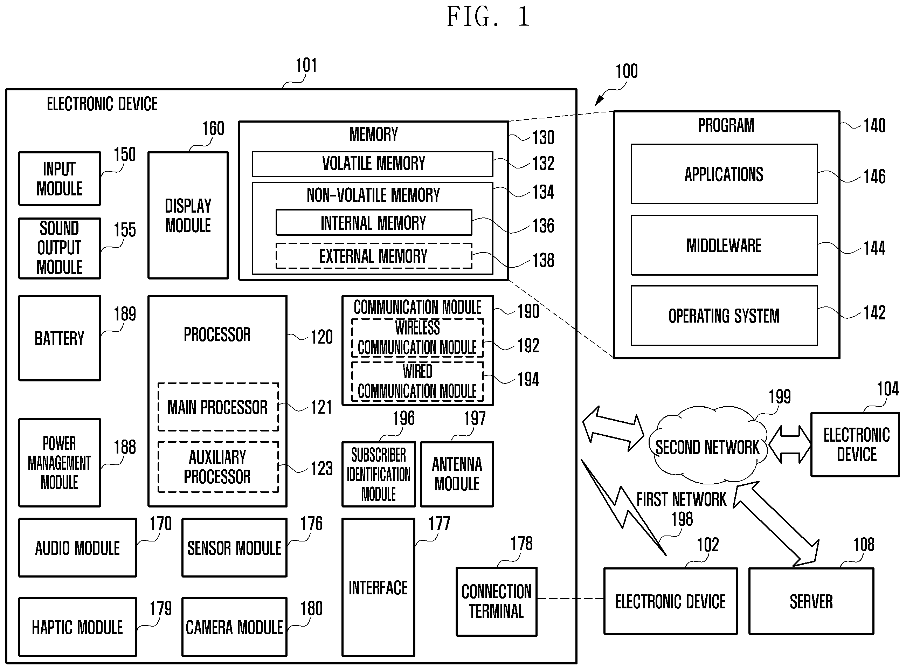

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

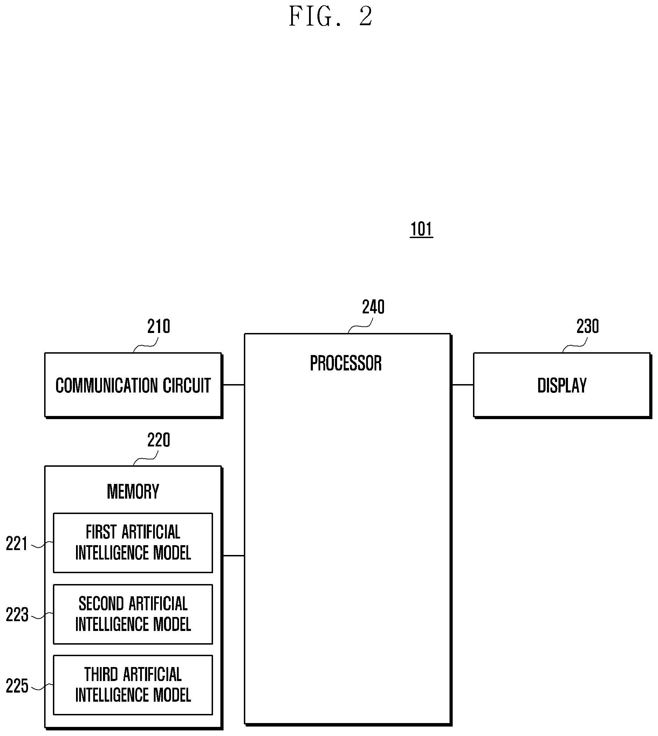

FIG. 2 is a block diagram illustrating an electronic device 101 according to an embodiment of the disclosure.

Referring to FIG. 2, an electronic device 101 (e.g., the electronic device 101 in FIG. 1) may include a communication circuit 210 (e.g., the communication module 190 in FIG. 1), a memory 220 (e.g., the memory 130 in FIG. 1), a display 230 (e.g., the display module 160 in FIG. 1), and/or a processor 240 (e.g., the processor 120 in FIG. 1).

According to an embodiment of the disclosure, the communication circuit 210 (e.g., the communication module 190 in FIG. 1) may control communication connection between the electronic device 101 and at least one external electronic device (e.g., the electronic devices 102 and 104 in FIG. 1) (and/or a server (e.g., the server 108 in FIG. 1)) under the control of the processor 240.

According to an embodiment of the disclosure, the memory 220 (e.g., the memory 130 in FIG. 1) may perform the function of storing a program (e.g., the program 140 in FIG. 1), an operating system (OS) (e.g., the operating system 142 in FIG. 1), various applications, and/or input/output data for processing and control by the processor 240 of the electronic device 101, and may store a program for controlling the overall operation of the electronic device 101. The memory 220 may store various configuration information necessary for the electronic device 101 to process functions related to various embodiments of the disclosure.

In an embodiment, the memory 220 may include a first artificial intelligence (AI) model 221, a second artificial intelligence model 223, and/or a third artificial intelligence model 225. In an embodiment, the operations based on the first artificial intelligence (AI) model 221, the second AI model 223, and/or the third AI model 225 may be performed by the processor 240.

In an embodiment, the memory 220 may store instructions for, by using the first artificial intelligence (AI) model 221, classifying each of a plurality of speakers from voice data related to a conversation, and converting voice data of each classified speaker into text data. The memory 220 may store instructions for, by using the second artificial intelligence model 223, analyzing context information of a conversation, based on the converted text data, and for generating at least one prompt, based on the analyzed context information of the conversation. The memory 220 may store instructions for, by using the third AI model 225, generating a plurality of images, based on the generated at least one prompt. The memory 220 may store instructions for generating an image related to a conversation, based on the plurality of images, under the control of the processor 240.

According to an embodiment of the disclosure, the display 230 may display an image under the control of the processor 240, and may be implemented as one of a liquid crystal display (LCD), a light-emitting diode (LED) display, a micro LED (µLED) display, an organic light-emitting diode (OLED) display, an active matrix organic light-emitting diode (AMOLED) display, a micro electro mechanical systems (MEMS) display, an electronic paper display, a flexible display, a foldable display, or a rollable display. However, the disclosure is not limited thereto.

In an embodiment, the display 230 may, based on the identified information related to mood of the conversation, display at least one content (e.g., a template, background music, a theme, and/or a visual effect indicating (or corresponding to) the emotional states of each of the plurality of speakers (e.g., a plurality of participants) and/or mood of the conversation) to be applied to the image, under the control of the processor 240. In an embodiment, the display 230 may display at least one item representing at least one generated prompt under the control of the processor 240.

According to an embodiment of the disclosure, the processor 240 may include, for example, a microcontroller unit (MCU), and may control multiple hardware components connected to the processor 240 by operating an operating system (OS) or an embedded software program. The processor 240 may control multiple hardware components according to instructions (e.g., the program 140 in FIG. 1) stored in the memory 220.

In an embodiment, the processor 240 may convert voice data related to a conversation of a plurality of speakers into text data. For example, the processor 240 may, by using the first artificial intelligence model 221, classify each of the plurality of speakers from the voice data related to the conversation, and convert voice data of each classified speaker into text data. In an embodiment, the processor 240 may convert entire voice data related to the conversation into text data without performing word filtering on the voice data related to the conversation.

In an embodiment, the processor 240 may, by using the second artificial intelligence model 223, analyze context information of a conversation, based on the converted text data, the context information including at least one of information related to a topic of the conversation, information related to understanding of a plurality of speakers for the conversation, or information related to mood of the conversation. For example, the processor 240 may extract at least one word repeatedly detected in the content of the conversation and/or at least one word exchanged between a plurality of speakers having different opinions on a specific topic in the content of the conversation. The processor 240 may identify information related to a topic of a conversation, based on a key word indicating context of a conversation. As another example, the processor 240 may, based on the converted text data, extract words indicating positive feedback (e.g., "good," "okay"), words indicating negative feedback (e.g., "dislike," "no") , and words indicating empathic feedback (e.g., "right"), with regard to a specific topic in the conversation, and may identify information related to understanding of the plurality of speakers for the conversation and/or information related to mood of the conversation. The processor 240 may, by using the second AI model 223, generate at least one prompt, based on the analyzed context information of the conversation. For example, the processor 240 may generate at least one prompt related to a conversation, based on at least one of information related to a topic of the conversation, information related to understanding of a plurality of speakers for the conversation, or information related to mood of the conversation.

In an embodiment, the processor 240 may, by using the third AI model 225, generate a plurality of images including at least one of at least one first object representing a plurality of speakers or at least one second object representing content of a conversation, based on the generated at least one prompt. For example, the at least one first object may include a graphic object (or an animated graphic object) such as an avatar or a character, and the at least one second object may include a speech-bubble-shaped graphic object. The processor 240 may generate an image related to the conversation, based on the generated plurality of images.

In an embodiment, the processor 240 may identify information related to mood of a conversation, based on the analyzed context information of the conversation, and may display (or provide) at least one content to be applied to the image, based on the identified information related to mood of the conversation. For example, the at least one content to be applied to the image may include at least one of a template, background music, a theme, or a visual effect corresponding to (or indicating) emotion states of respective speakers and/or mood of the conversation. When an input for selecting the at least one content is detected, the processor 240 may generate a second prompt related to the selected at least one content. The processor 240 may, based on a first prompt generated based on the analyzed context information of the conversation and a second prompt related to the selected at least one content, generate a plurality of images including at least one of a first object representing a plurality of speakers or a second object representing content of the conversation, and generate an image related to the conversation to which the content is applied.

An electronic device 101 according to an embodiment of the disclosure may include a processor 240 and a memory 220 configured to store instructions. According to an embodiment, the instructions, when executed by the processor 240, may cause the electronic device 101 to convert voice data related to a conversation of a plurality of speakers into text data. According to an embodiment, the instructions, when executed by the processor 240, may cause the electronic device 101 to analyze context information of a conversation, based on the converted text data, the context information including at least one of information related to a topic of the conversation, information related to understanding of a plurality of speakers for the conversation, or information related to mood of the conversation. According to an embodiment, the instructions, when executed by the processor 240, may cause the electronic device 101 to generate at least one prompt, based on the analyzed context information of the conversation. According to an embodiment, the instructions, when executed by the processor 240, may cause the electronic device 101 to generate a plurality of images including at least one of at least one first object representing a plurality of speakers or at least one second object representing content of the conversation, based on the generated at least one prompt. According to an embodiment, the instructions, when executed by the processor 240, may cause the electronic device 101 to generate an image related to a conversation, based on the generated plurality of images.

At least one prompt according to an embodiment may include a first prompt related to entire content of a conversation. The at least one prompt according to an embodiment may include a second prompt related to a summary of contents of the conversation. The at least one prompt according to an embodiment may include a third prompt related to at least one topic of a conversation.

According to an embodiment, the instructions, when executed by the processor 240, may cause the electronic device 101 to extract at least one of at least one first word repeatedly detected in a conversation or at least one second word exchanged between a plurality of speakers while having different opinions on at least one topic of the conversation. According to an embodiment, the instructions, when executed by the processor 240, may cause the electronic device 101 to identify information related to a topic of the conversation, based on at least one of the at least one first word or the at least one second word.

According to an embodiment, the instructions, when executed by the processor 240, may cause the electronic device 101 to extract, based on the converted text data, at least one of at least one third word indicating positive feedback, at least one fourth word indicating negative feedback, or at least one fifth word indicating empathy with regard to at least one topic of the conversation. According to an embodiment, the instructions, when executed by the processor 240, may cause the electronic device 101 to identify at least one of information related to understanding of the plurality of speakers for the conversation or information related to mood of the conversation, based on at least one of the at least one third word, the at least one fourth word, or the at least one fifth word.

The electronic device 101 according to an embodiment may further include a display 230. According to an embodiment, the instructions, when executed by the processor 240, may cause the electronic device 101 to display at least one item indicating the generated at least one prompt on the display 230. According to an embodiment, the instructions, when executed by the processor 240, may cause the electronic device 101 to, when an input for selecting one of the at least one item is detected, generate a plurality of images related to a prompt corresponding to the selected item. According to an embodiment, the instructions, when executed by the processor 240, may cause the electronic device 101 to generate an image related to the prompt corresponding to the selected item, based on the generated plurality of images related to the prompt.

According to an embodiment, the instructions, when executed by the processor 240, may cause the electronic device 101 to identify information related to mood of the conversation, based on the analyzed context information of the conversation. According to an embodiment, the instructions, when executed by the processor 240, may cause the electronic device 101 to display, based on the identified information related to mood of a conversation, at least one content to be applied to an image. According to an embodiment, the instructions, when executed by the processor 240, may cause the electronic device 101 to, when an input for selecting the at least one piece of displayed content is detected, generate a second prompt related to the selected at least one content. According to an embodiment, the instructions, when executed by the processor 240, may cause the electronic device 101 to generate, based on at least one prompt and the second prompt, a plurality of images including at least one of at least one first object representing a plurality of speakers or at least one second object representing content of the conversation.

In an embodiment, the at least one content to be applied to the image may include at least one of a template, background music, a theme, or a visual effect.

According to an embodiment, the instructions, when executed by the processor 240, may cause the electronic device 101 to analyze, based on the converted text data, context information of a conversation related to a user of the electronic device 101 among a plurality of speakers. According to an embodiment, the instructions, when executed by the processor 240, may cause the electronic device 101 to generate a plurality of images related to a conversation of a user, based on the analyzed context information of the conversation related to the user. According to an embodiment, the instructions, when executed by the processor 240, may cause the electronic device 101 to generate an image related to a conversation of a user, based on the generated plurality of images related to the conversation of the user.

According to an embodiment, the instructions, when executed by the processor 240, may cause the electronic device 101 to analyze, based on the converted text data, context information of a conversation related to at least one other speaker except for the user of the electronic device 101 among a plurality of speakers. According to an embodiment, the instructions, when executed by the processor 240, may cause the electronic device 101 to determine whether to modify the generate image related to the conversation of the user, based on the analyzed context information of the conversation related to the at least one other speaker. According to an embodiment, the instructions, when executed by the processor 240, may cause the electronic device 101 to, in case that it is determined to modify the generated image related to the conversation of the user, generate a plurality of images related to the at least one other speaker, based on the context information of the conversation related to the at least one other speaker. According to an embodiment, the instructions, when executed by the processor 240, may cause the electronic device 101 to modify the generated image related to the conversation of the user, based on at least one image among the plurality of images related to the conversation of the user and at least one image among the plurality of images related to the at least one other speaker.

The memory 220 according to an embodiment may include a first artificial intelligence model 221 trained to classify each speaker from voice data related to a conversation of a plurality of speakers, and to convert voice data of each classified speaker into text data. The memory 220 according to an embodiment may include a second artificial intelligence model 223 trained to analyze context information, based on the text data, and to generate at least one prompt, based on the analyzed context information. The memory 220 according to an embodiment may include a third artificial intelligence model 225 trained to generate a plurality of images, based on the generated at least one prompt.

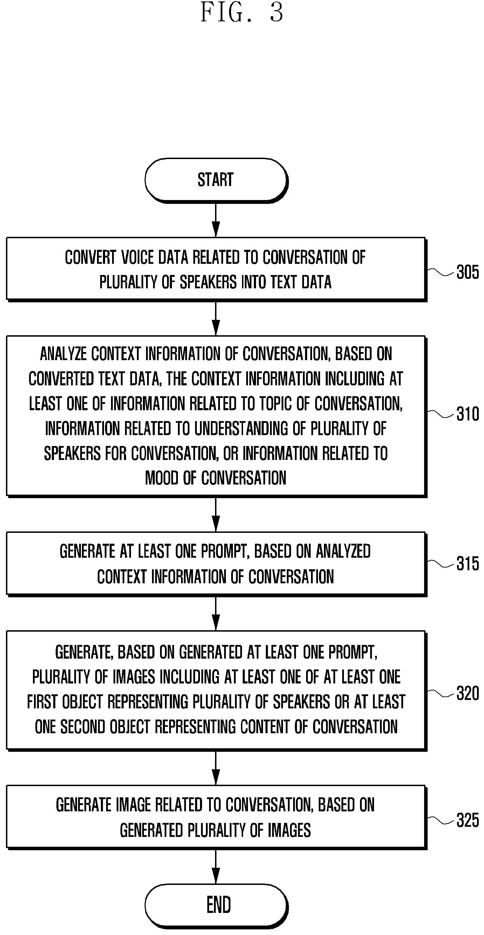

FIG. 3 is a flowchart illustrating a method of generating an image, based on voice data related to a conversation according to an embodiment of the disclosure.

In the following embodiments, the operations in FIG. 3 may be performed in sequence, but are not necessarily performed in sequence. For example, the sequence of the operations in FIG. 3 may be changed, and at least two operations may be performed in parallel.

According to an embodiment, operations 305 to 325 in FIG. 3 may be performed by a processor (e.g., the processor 240 in FIG. 2) of an electronic device (e.g., the electronic device 101 in FIG. 1).

In an embodiment, voice data related to a conversation may include voice data in which a conversation of a plurality of speakers (e.g., a plurality of participants) is recorded, voice data in which content of a meeting of a plurality of speakers is recorded, or voice data of a plurality of speakers included in a captured image. However, the disclosure is not limited thereto.

In an embodiment, the processor 240 may detect an input related to execution of a voice data-based image generation function. For example, the voice data-based image generation function may be a function provided through a specific application. The disclosure is not limited thereto, and the voice data-based image generation function may be a function provided by the electronic device 101 by default. In an embodiment, the specific application may include a recording application, a meeting application, a chatting application, or a photo application. However, the disclosure is not limited thereto. In an embodiment, when an input for selecting an object (or an icon or an item) related to execution of an image generation function is detected, the object being is displayed on a screen of the executed specific application or displayed as a menu, the processor 240 may perform operations 305 to 325 described below.

Referring to FIG. 3, the processor 240 may convert voice data related to a conversation of a plurality of speakers into text data in operation 305.

In an embodiment, the processor 240 may classify each of a plurality of speakers from the voice data related to a conversation. The processor 240 may convert voice data of each classified speaker into text data. In an embodiment, the processor 240 may convert the entire voice data related to a conversation into text data without performing word filtering on the voice data related to the conversation.

In an embodiment, the memory (e.g., the memory 220 in FIG. 2) may store a first artificial intelligence model (e.g., the first artificial intelligence model 221 in FIG. 2). For example, the first AI model 221 may be a model trained to classify each speaker from voice data related to a conversation of a plurality of speakers, and to convert voice data of each classified speaker into text data. The disclosure is not limited thereto, and the first AI model 221 may be a model trained to convert voice data including noise into text data, even when noise is detected in the voice data. The processor 240 may convert the voice data related to the conversation of a plurality of speakers into text data, based on the first artificial intelligence model 221 stored in the memory 220.

Although voice data in FIG. 3 according to an embodiment is described as voice data related to a conversation of plurality of speakers, the disclosure is not limited thereto. For example, the voice data may be voice data related to a single speaker.

In an embodiment, in operation 310, the processor 240 may analyze context information of a conversation, based on the converted text data, the context information including at least one of information related to a topic of the conversation, information related to understanding of a plurality of speakers for the conversation, or information related to mood of the conversation. For example, the processor 240 may analyze the context information of the conversation based on the converted text data, and identify a flow (or context) of the conversation.

In an embodiment, the processor 240 may extract key words indicating context of a conversation, based on the converted text data. For example, the processor 240 may extract at least one word repeatedly detected in the content of the conversation and/or at least one word exchanged between a plurality of speakers having different opinions regarding a specific topic in the content of the conversation. The processor 240 may identify information related to a topic of the conversation, based on key words indicating context of a conversation.

In an embodiment, the processor 240 may, based on the converted text data, extract at least one of a word indicating a positive feedback (e.g., "good," "okay"), a word indicating negative feedback (e.g., "dislike," "no"), or a word indicating empathic feedback (e.g., "right"), with regard to a specific topic in the conversation, thereby identifying information related to understanding of a plurality of speakers for the conversation and/or information related to mood of the conversation.

In an embodiment, the memory 220 may store a second artificial intelligence model (e.g., the second artificial intelligence model 223 in FIG. 2). For example, the second AI model 223 may be a model trained to identify a flow of a conversation by analyzing the context of text data. The processor 240 may, by using the second artificial intelligence model 223 stored in the memory 220, analyze the context based on the converted text data and identify the flow of a conversation.

In an embodiment, in operation 315, the processor 240 may generate at least one prompt, based on the analyzed context information of the conversation. For example, the processor 240 may generate at least one prompt related to the conversation, based on at least one of information related to a topic of the conversation, information related to understanding of a plurality of speakers for the conversation, or information related to mood of the conversation. For example, the processor 240 may generate a first prompt related to entire content of a conversation, a second prompt related to a summary of contents of the conversation, and/or a third prompt related to at least one topic of the conversation. For example, the third prompt may be related to at least one topic of a conversation identified based on at least one word repeatedly detected in the content of a conversation and/or at least one word exchanged between a plurality of speakers having differing opinions on a specific topic in the content of a conversation.

In an embodiment, although it has been described that three prompts are generated based on the analyzed context information of the conversation, the disclosure is not limited thereto. For example, the processor 240 may generate more than three prompts, such as a prompt related to a conversation (or an utterance) of a user of the electronic device 101 and/or a prompt related to a conversation (or an utterance) of a specific speaker among a plurality of speakers, based on the analyzed context information of the conversation.

In an embodiment, the processor 240 may, by using the second AI model 223 stored in the memory 220, generate at least one prompt (e.g., a first prompt, a second prompt, and/or a third prompt) based on the analyzed context information of the conversation. For example, the second AI model 223 stored in the memory 220 may be a model trained to generate a prompt, based on an identified flow of the conversation.

In an embodiment, in operation 320, the processor 240 may generate a plurality of images including at least one of at least one first object representing a plurality of speakers or at least one second object representing content of a conversation, based on the generated at least one prompt.

In an embodiment, the memory 220 may store a third artificial intelligence model (e.g., the third artificial intelligence model 225 in FIG. 2). For example, the third AI model 225 may be a model trained to generate one image or a plurality of images by using the generated at least one prompt.

In an embodiment, the processor 240 may, by using the third artificial intelligence model 225 stored in the memory 220, generate a plurality of images, based on at least one prompt for representing a conversation over time. For example, the at least one prompt may include a plurality of prompts, for example, a first prompt related to entire content of a conversation, a second prompt related to a summary of contents of the conversation, and/or a third prompt related to at least one topic of the conversation, as described in operation 315. In this case, the processor 240 may generate a plurality of images for each prompt. For example, the processor 240 may generate, based on the first prompt, a plurality of images representing entire content of the conversation in order to represent a conversation over time. As another example, the processor 240 may generate, based on the second prompt, one image or a plurality of images related to a summary of contents of the conversation. As another example, the processor 240 may generate, based on the third prompt, a plurality of images related to at least one topic of the conversation.

In an embodiment, the plurality of images may include at least one of a first object representing a plurality of speakers or a second object representing content of the conversation. For example, the at least one first object representing a plurality of speakers may include a graphic object (or an animated graphic object) such as an avatar or a character. The at least one second object representing content of the conversation may include a speech-bubble-shaped graphic object. For example, the at least one second object in an image may be located in close proximity to the at least one corresponding first object. The speech-bubble-shaped graphic object may include text (e.g., content of the conversation). The processor 240 may display the text by applying a visual effect, such as a font size, a style, a color, a thickness, and/or a motion, based on the context information of the conversation analyzed in operation 310 above.

In an embodiment, in operation 325, the processor 240 may generate an image related to a conversation, based on the generated plurality of images. For example, the processor 240 may generate an image, based on a plurality of images generated based on the first prompt, the images representing the entire content of the conversation. As another example, the processor 240 may generate an image, based on a plurality of images generated based on the second prompt, the images being related to a summary of contents of the conversation. As another example, the processor 240 may generate an image, based on a plurality of images generated based on the third prompt, the images being related to at least one topic of the conversation.

In an embodiment, the processor 240 may generate an image after identifying and removing a duplicated image (or area) among the generated plurality of images.

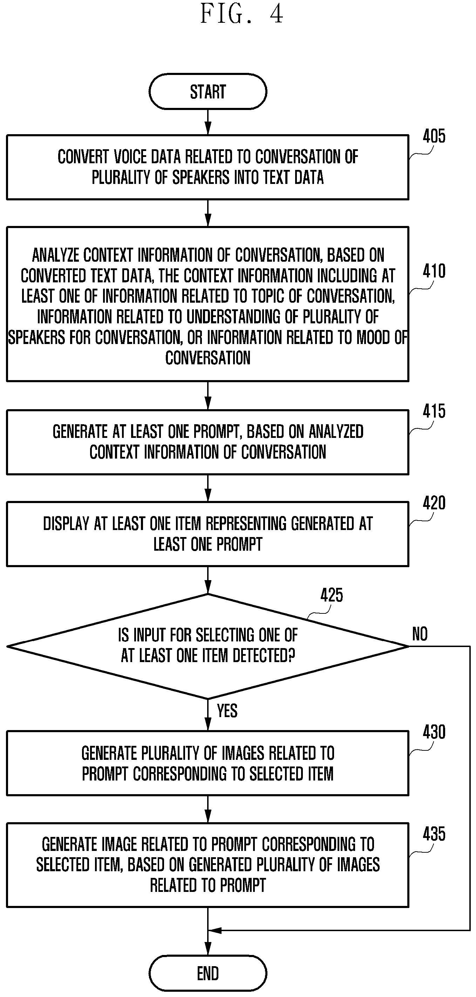

FIG. 4 is a flowchart illustrating a method of generating an image, based on voice data related to a conversation, according to an embodiment of the disclosure.

In the following embodiments, the operations in FIG. 4 may be performed in sequence, but are not necessarily performed in sequence. For example, the order of each of the operations in FIG. 4 may be changed, and at least two operations may be performed in parallel.

According to an embodiment, operations 405 to 435 in FIG. 4 may be understood as being performed by a processor (e.g., the processor 240 in FIG. 2) of an electronic device (e.g., the electronic device 101 in FIG. 1).

Operations 405, 410, and 415 according to various embodiments are substantially the same as operations 305, 310, and 315 of FIG. 3 described above, and thus detailed descriptions thereof may be omitted.

Referring to FIG. 4, the processor 240 may convert voice data related to a conversation of a plurality of speakers (e.g., a plurality of participants) into text data in operation 405. For example, the processor 240 may convert entire voice data related to a conversation into text data without performing word filtering on the voice data related to the conversation.

In an embodiment, the memory (e.g., the memory 220 in FIG. 2) may store a first artificial intelligence model (e.g., the first artificial intelligence model 221 in FIG. 2) trained to classify each speaker from voice data related to the conversation of a plurality of speakers and to convert voice data of each classified speaker into text data. The processor 240 may perform the operation 405 described above, based on the first AI model 221 stored in the memory 220.

In an embodiment, the processor 240 may, based on the converted text data, analyze context information of the conversation including at least one of information related to the topic of the conversation, information related to understanding of plurality of speakers for the conversation, or information related to mood of the conversation in operation 410.

In an embodiment, in operation 415, the processor 240 may generate at least one prompt, based on the analyzed context information of the conversation. For example, the processor 240 may generate at least one prompt related to the conversation, based on at least one of information related to a topic of the conversation, information related to understanding of plurality of speakers for the conversation, or information related to mood of the conversation.

In an embodiment, the processor 240 may generate a first prompt related to entire content of a conversation, a second prompt related to a summary of contents of the conversation, and/or a third prompt related to at least one topic of the conversation. For example, the third prompt may be associated with information related to a topic of the conversation identified based on at least one word repeatedly detected in the content of the conversation and/or at least one word exchanged between a plurality of speakers having different opinions regarding a specific topic in the content of the conversation.

In an embodiment, the memory 220 may store a second AI model (e.g., the second AI model 223 in FIG. 2) trained to analyze the context of text data to identify the flow of a conversation and to generate a prompt based on the flow of the conversation. The processor 240 may perform the above-described operations 410 and 415, based on the second AI model 223 stored in the memory 220.

In an embodiment, the processor 240 may display at least one item indicating the generated at least one prompt in operation 420. For example, the processor 240 may display, on a display (e.g., the display 230 in FIG. 2), a first item representing a first prompt related to entire content of a conversation, a second item representing a second prompt related to a summary of contents of the conversation, and/or a third item representing a third prompt related to at least one topic of the conversation.

In an embodiment, in operation 425, the processor 240 may identify whether an input for selecting one of at least one item is detected. When an input for selecting one of the at least one item is detected (e.g., "YES" in operation 425), the processor 240 may generate a plurality of images related to a prompt corresponding to the selected item in operation 430. For example, when an input for selecting the first item is detected, the processor 240 may generate a plurality of images related to a first prompt corresponding to the selected first item. For example, the processor 240 may, based on the first prompt, generate a plurality of images representing the entire content of a conversation in order to represent a conversation over time. As another example, the processor 240 may, when an input for selecting the second item is detected, generate a plurality of images related to a second prompt corresponding to the selected second item. For example, the processor 240 may, based on the second prompt, generate a plurality of images (or one image) related to a summary of contents of the conversation. For another example, when an input for selecting the third item is detected, the processor 240 may generate a plurality of images related to a third prompt corresponding to the selected third item. For example, the processor 240 may, based on the third prompt, generate a plurality of images related to at least one topic of the conversation.

In an embodiment, the plurality of images may include at least one of a first object (e.g., a graphic object (or an animated graphic object) such as an avatar or a character) representing a plurality of speakers or a second object (e.g., a speech-bubble-shaped graphic object including text associated with the content of the conversation) representing the content of the conversation.

In an embodiment, the memory 220 may store a third AI model (e.g., the third AI model 225 in FIG. 2) trained to generate one image or a plurality of images by using the generated at least one prompt. The processor 240 may perform the above-described operation 430, based on the third artificial intelligence model 225 stored in the memory 220.

In an embodiment, in operation 435, the processor 240 may generate an image related to a prompt corresponding to the selected item, based on the plurality of images related to the generated prompt. In an embodiment, the processor 240 may identify a duplicated image (or area) among the generated plurality of images, remove the duplicated image (or area), and then generate an image related to the prompt corresponding to the selected item.

In an embodiment, if an input for selecting one of at least one item is not detected (e.g., "NO" in operation 425), the processor 240 may terminate the operation of generating an image related to the at least one prompt based on the plurality of images.

In an embodiment, although it has been described that, based on an input for selecting one of a first item indicating the first prompt, a second item indicating the second prompt, and a third item indicating the third prompt, an image related to a prompt corresponding to the selected item is generated, the disclosure is not limited thereto. For example, an operation of generating, based on the first prompt, an image related to the first prompt related to entire content of a conversation may be provided as a default function. An operation of generating an image based on the second prompt or the third prompt may be provided as an optional function (e.g., a function performed by a user input). For example, the processor 240 may display only the second item indicating the second prompt and the third item indicating the third prompt on the display 230, and when an input for selecting the second item or the third item is detected, generate an image related to the second prompt or the third prompt, based on the second prompt or the third prompt. In this case, if no input for selecting at least one of the at least one item is detected (e.g., "NO" in operation 425), the processor 240 may perform an operation of generating an image related to a first prompt provided as a default function.

In FIGS. 3 and 4 according to various embodiments, the electronic device 101 may generate an image representing content of a conversation over time, based on a plurality of images generated based on the analyzed context information of the conversation, thereby helping a user to remember a situation at a time of the conversation and improving understanding of the content of the conversation.

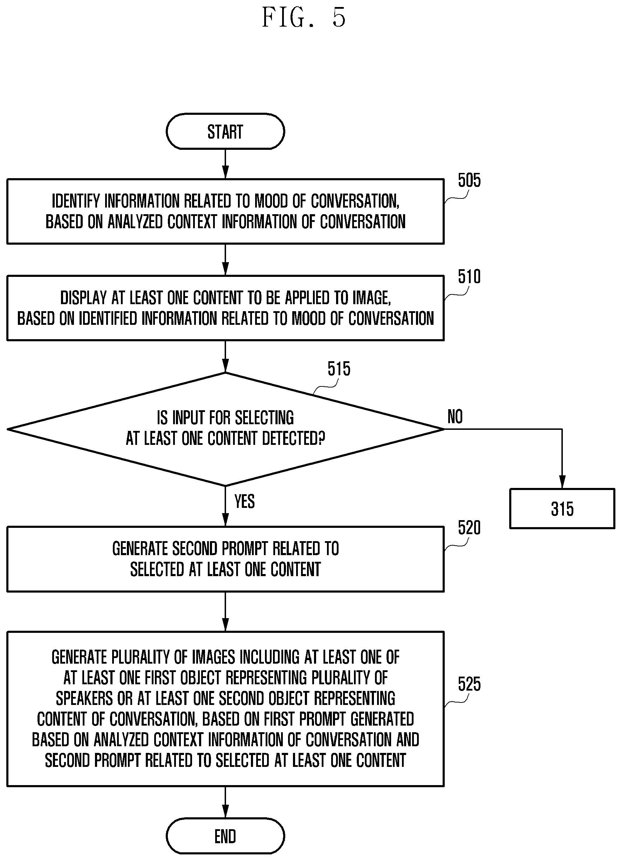

FIG. 5 is a flowchart illustrating a method of generating an image, based on voice data related to a conversation, according to an embodiment of the disclosure.

In the following embodiments, the operations of FIG. 5 may be performed sequentially, but the operations are not necessarily performed in sequence. For example, the order of the operations in FIG. 5 may be changed, and at least two operations may be performed in parallel.

According to an embodiment, operations 505 to 525 in FIG. 5 may be understood as operations performed by a processor (e.g., the processor 240 in FIG. 2) of an electronic device (e.g., the electronic device 101 in FIG. 1).

FIG. 5 according to various embodiments may illustrate operations performed in addition to operation 310 of FIG. 3 (or operation 410 of FIG. 4) described above.

Referring to FIG. 5, in operation 505, the processor 240 may identify information related to mood of a conversation, based on the analyzed context information of the conversation. For example, the information related to mood of the conversation may include information related to the emotion states of each of the plurality of speakers (e.g., a plurality of participants) and/or information related to the mood of the conversation. For example, the emotional states of the respective speakers may include joy, sadness, surprise, anger, fear, fatigue, displeasure, calmness, and/or boredom. However, the disclosure is not limited thereto. Information related to the mood of the conversation may include a tense atmosphere, an awkward atmosphere, a relaxed atmosphere, and/or a friendly atmosphere. However, the disclosure is not limited thereto.

In an embodiment, in operation 510, the processor 240 may, based on the identified information related to mood of the conversation, display at least one content to be applied to an image. In an embodiment, the at least one content to be applied to the image may include at least one of a template, background music, a theme, or a visual effect. For example, at least one content to be applied to the image may correspond to information related to mood of the conversation. For example, at least one content to be applied to the image may include at least one of a template, background music, a theme, or a visual effect that represents (or corresponds to) the emotion state of each of the plurality of speakers and/or the mood of the conversation.

The disclosure is not limited thereto, and the processor 240 may provide pre-defined content (e.g., preset content) to be applied to the image. For example, the processor 240 may provide pre-defined content to be applied to the image by learning various situations according to image production purposes, such as public data, entertainment, meeting minutes, or education.

In an embodiment, in operation 515, the processor 240 may identify whether an input for selecting at least one content is detected. When an input for selecting at least one content is detected (e.g., "YES" in operation 515), the processor 240 may generate a second prompt related to the selected at least one content in operation 520. For example, the second prompt related to the selected at least one content may be related to emotional states of respective speakers and/or mood of the conversation. For example, when the mood of the conversation is relaxed, the processor 240 may generate a second prompt such as "apply quiet background music" and/or "apply a bright template or theme".

In an embodiment, in operation 525, the processor 240 may, based on a first prompt generated based on the analyzed context information of the conversation and a second prompt related to the selected at least one content, generate a plurality of images including at least one of a first object representing a plurality of speakers or a second object representing content of the conversation. Although not illustrated, the processor 240 may generate an image related to the conversation, to which content (e.g., a template, background music, a theme, or a visual effect including at least one of the emotional states of the plurality of speakers and/or the mood of the conversation) is applied, based on the generated plurality of images.

In an embodiment, when no input for selecting at least one content is detected (e.g., "NO" in operation 515), the processor 240 may branch to operation 315 (or 415), and perform an operation of generating at least one prompt, based on the analyzed context information of the conversation.

In FIG. 5 according to various embodiments, the electronic device 101 may provide at least one content to be applied to an image, the at least one content including at least one of a template, background music, a theme, or a visual effect corresponding to emotional states of respective speakers and/or mood of the conversation, so that a high- quality image representing content of a conversation over time can be generated.

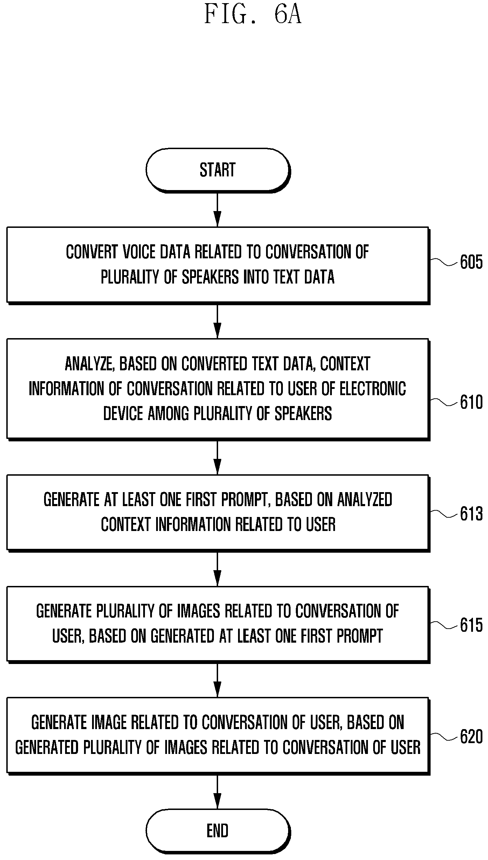

FIG. 6A is a flowchart illustrating a method of generating an image, based on voice data related to a conversation of a user of an electronic device 101, according to an embodiment of the disclosure.

In the following embodiments, the operations in FIG. 6A may be performed sequentially, but they are not necessarily performed sequentially. For example, the order of the operations in FIG. 6A may be changed, and at least two operations may be performed in parallel.

According to an embodiment, operations 605 to 620 in FIG. 6A may be understood as being performed by a processor (e.g., the processor 240 in FIG. 2) of an electronic device (e.g., the electronic device 101 in FIG. 1).

Referring to FIG. 6A, in operation 605, the processor 240 may convert voice data related to a conversation of a plurality of speakers (e.g., a plurality of participants) into text data. For example, the processor 240 may classify each of a plurality of speakers from the voice data related to a conversation. The processor 240 may convert voice data of each classified speaker into text data.

In an embodiment, the processor 240 may perform operation 605 described above, based on a first artificial intelligence model (e.g., the first artificial intelligence model 221 in FIG. 2) stored in the memory (e.g., the memory 220 in FIG. 2), the first artificial intelligence model being trained to classify each speaker from voice data related to a conversation of a plurality of speakers and to convert voice data of each classified speaker into text data.

In an embodiment, in operation 610, the processor 240 may, based on the converted text data, analyze context information of a conversation related to a user of the electronic device 101 among the plurality of speakers.

In an embodiment, the memory 220 may store in advance data related to a voice of a user of the electronic device 101 (e.g., pitch, speed, and/or intonation of the voice). The processor 240 may identify voice data related to the user of the electronic device 101 among a plurality of speakers classified from the voice data, based on data related to the voice of the user of the electronic device 101 stored in the memory 220. The processor 240 may analyze context information of a conversation related to the user of the electronic device 101, based on text data corresponding to the voice data related to the user of the electronic device 101, among the converted text data. For example, the processor 240 may analyze context information of the conversation related to the user of the electronic device 101, the context information including at least one of information related to a topic of the conversation related to the user or information related to mood of the conversation related to the user.

In an embodiment, in operation 613, the processor 240 may generate at least one first prompt, based on the analyzed context information of the conversation related to the user. For example, the processor 240 may generate at least one first prompt, based on a key word indicating the context of a conversation and/or the mood of the conversation. For example, the processor 240 may generate at least one of a prompt related to entire content of the conversation related to the user, a prompt related to a summary of contents of the conversation related to the user, and a prompt related to at least one topic of the conversation related to the user.

In an embodiment, the processor 240 may perform operations 610 and 613 described above, based on a second artificial intelligence model (e.g., the second artificial intelligence model 223 in FIG. 2) stored in the memory 220, the second artificial intelligence model being trained to analyze context of text data to identify a flow of a conversation and to generate a prompt based on the identified flow of the conversation.

In an embodiment, the processor 240 may generate a plurality of images related to the user, based on at least one generated first prompt, in operation 615. For example, the processor 240 may generate a plurality of images associated with the user, based on at least one of a prompt related to entire content of a conversation associated with the user, a prompt related to a summary of contents of the conversation associated with the user, or a prompt related to at least one topic of the conversation associated with the user.

In an embodiment, the generated plurality of images may include at least one of at least one first object (e.g., a graphic object (or an animated graphic object) such as an avatar or a character) representing a user of the electronic device 101 (and at least one second speaker except for the user of the electronic device 101 among a plurality of speakers) or at least one second object (e.g., a speech-bubble-shaped graphic object including text related to content of a conversation) representing content of the conversation.

In an embodiment, the processor 240 may perform the operation 615 described above, based on a third artificial intelligence model (e.g., the third artificial intelligence model 225 in FIG. 2) stored in the memory 220, the third artificial intelligence model being trained to generate one image or a plurality of images by using at least one prompt.

In an embodiment, in operation 620, the processor 240 may generate an image related to a conversation of a user, based on the generated plurality of images of the conversation related to the user.

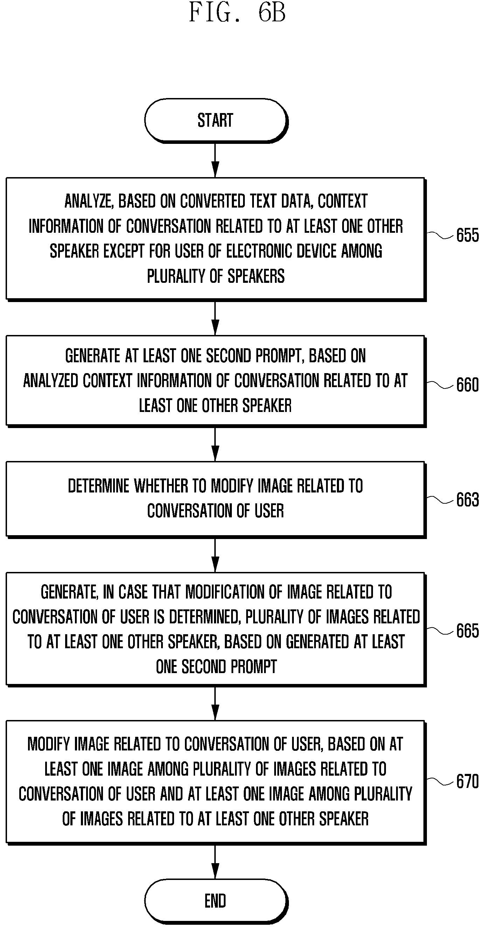

FIG. 6B is a flowchart illustrating a method of modifying an image related to a conversation of a user of an electronic device 101 according to an embodiment of the disclosure.

In the following embodiments, the operations of FIG. 6B may be performed in sequence, but are not necessarily performed in sequence. For example, the order of the operations in FIG. 6B may be changed, and at least two operations may be performed in parallel.

According to an embodiment, operations 655 to 670 in FIG. 6B may be understood as being performed by a processor (e.g., the processor 240 in FIG. 2) of an electronic device (e.g., the electronic device 101 in FIG. 1).

FIG. 6B according to various embodiments may illustrate operations performed in addition to those of FIG. 6A described above.

Referring to FIG. 6B, in operation 655, the processor 240 may, based on the converted text data, analyze context information of a conversation related to at least one other speaker except for the user of the electronic device 101 among a plurality of speakers (e.g., a plurality of participants). For example, the processor 240 may analyze context information of the conversation related to the at least one other speaker, the context information including at least one of information related to understanding (e.g., empathy and/or disapproval) of the at least one other speaker with regard to the content uttered by the user of the electronic device 101, or information related to emotions (e.g., joy, sadness, surprise, anger, fear, fatigue, unpleasantness, calmness, and/or boredom) of the at least one other speaker. Operation 655 may be performed based on a second AI model (e.g., the second AI model 223 in FIG. 2) stored in the memory (e.g., the memory 220 in FIG. 2).

In an embodiment, in operation 660, the processor 240 may generate at least one second prompt, based on the analyzed context information of a conversation related to at least one other speaker. For example, the processor 240 may generate at least one prompt related to a conversation related to at least one other speaker, based on at least one of information related to understanding of the at least one other speaker with respect to content uttered by the user of the electronic device 101, or information related to emotions of the at least one other speaker.

According to an embodiment, operations 655 and 660 described above may be performed, based on a second artificial intelligence model (e.g., the second artificial intelligence model 223 in FIG. 2) stored in a memory (e.g., the memory 220 in FIG. 2).

In an embodiment, in operation 663, the processor 240 may determine whether to modify an image related to the user's conversation. For example, in case that objects related to at least one other speaker in the user-related image generated in operation 620 of FIG. 6A described above does not correspond to the context information of the conversation related to the at least one other speaker (e.g., when the objects are expressed inconsistently with the context information of the conversation related to the at least one other speaker), the processor 240 may determine to modify the image related to the user's conversation. For example, when, in the image related to the user generated in operation 620 of FIG. 6A, at least one object related to at least one other speaker is expressed as an object indicating a positive feedback word, and the context information of the conversation related to the at least one other speaker analyzed in operation 655 described above is identified as indicating a negative feedback word, the processor 240 may determine to modify the image related to the user's conversation.

In an embodiment, in operation 665, when it is determined that an image related to the user's conversation is to be modified, the processor 240 may generate a plurality of images related to at least one other speaker, based on at least one second prompt related to the at least one other speaker. In operation 660, the processor 240 may modify the image related to the user's conversation, based on at least one image among the plurality of images related to the user and at least one image among the plurality of images related to the at least one other speaker.

In an embodiment, although not illustrated, the processor 240 may further display, on a display (e.g., the display 230 in FIG. 2), a user interface for prompting a user input for final identification of a modified image. When a user input for final identification of the modified image is detected on the user interface, the processor 240 may store the modified image related to the user's conversation in the memory 220.

In FIG. 6A according to various embodiments, the electronic device 101 may provide an image reflecting the intention of the user of the electronic device 101 by generating an image based on a conversation of the user among a plurality of speakers. In addition, in FIG. 6B according to various embodiments, the electronic device 101 may, based on conversation of at least one other speaker among the plurality of speakers, modify the image generated based on the conversation of the user of the electronic device 101, thereby allowing the intention of the at least one other speaker to also be reflected in the image generated based on the conversation of the user of the electronic device 101.

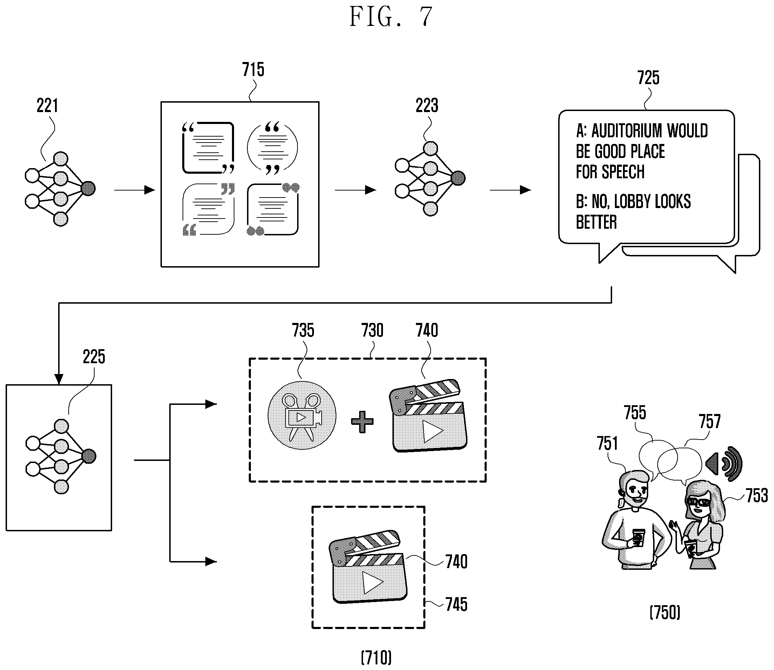

FIG. 7 schematically illustrates a method of generating an image, based on voice data related to a conversation, according to an embodiment of the disclosure.

Referring to <710> of FIG. 7, an electronic device (e.g., the electronic device 101 of FIG. 1) may include a plurality of AI models stored in a memory (e.g., the memory 220 of FIG. 2). For example, the plurality of artificial intelligence models may include a first artificial intelligence model 221, a second artificial intelligence model 223, and/or a third artificial intelligence model 225. However, the disclosure is not limited thereto.

In an embodiment, the first artificial intelligence model 221 may be a model trained to classify each speaker from voice data related to a conversation of a plurality of speakers (e.g., a plurality of participants) and to convert voice data of each classified speaker into text data. The second artificial intelligence model 223 may be a model trained to analyze the context of text data to identify the flow of a conversation, and generate a prompt based on the identified flow of the conversation. The third AI model 225 may be a model trained to generate one image or a plurality of images by using the generated at least one prompt.

In an embodiment, the processor of the electronic device 101 (e.g., the processor 240 in FIG. 2) may convert voice data related to a conversation of a plurality of speakers into text data 715 by using the first artificial intelligence model 221. The processor 240 may, based on the converted text data 715, analyze context information of a conversation by using the second AI model 223. The context information of the conversation may include at least one of information related to a topic of the conversation, information related to understanding of the plurality of speakers for the conversation, or information related to mood of the conversation. The processor 240 may generate at least one prompt, based on the context information of the conversation analyzed by using the second artificial intelligence model 223. For example, the processor 240 may generate a first prompt related to entire content of a conversation, a second prompt related to a summary of contents of the conversation, and/or a third prompt related to at least one topic of the conversation.

In FIG. 7 according to various embodiments, the processor 240 may, based on the analyzed context information of the conversation, generate at least one prompt 725 (e.g., an utterance by speaker A of "An auditorium would be a good place for a speech," and an utterance by speaker B of "No, the lobby looks better").

In an embodiment, the processor 240 may generate a plurality of images, based on at least one prompt 725 (e.g., a first prompt (e.g., a first prompt related to entire content of a conversation), a second prompt (e.g., a second prompt related to a summary of contents of the conversation), or a third prompt (e.g., a third prompt related to at least one topic of a conversation)), by using the third AI model 225, and generate at least one video 735 or 740 related to the conversation, by using the generated plurality of images.

In an embodiment, the processor 240 may generate, by default, a video 740 related to the first prompt (e.g., a first prompt related to the entire content of the conversation), as shown in <745>, and provide the video to the user. The disclosure is not limited thereto, and the processor 240 may, as shown in <730>, generate and provide, by default, both the video 740 related to the first prompt and the video 735 related to a second prompt (e.g., a second prompt related to a summary of contents of the conversation) or a third prompt (e.g., a third prompt related to at least one topic of the conversation)).

<750> of FIG. 7 according to an embodiment illustrates some of a plurality of images generated based on at least one prompt 725. In an embodiment, the processor 240 may generate a plurality of images including at least one first object 751 or 753 representing a plurality of speakers or at least one second object 755 or 757 representing content of a conversation, based on at least one prompt 725, by using a third AI model 225. For example, the at least one first object 751 or 753 representing a plurality of speakers may include a graphic object (or an animated graphic object) such as an avatar or a character. The at least one second object representing the content of the conversation may include a speech-bubble-shaped graphic object including text to which visual effects (e.g., font size, style, color, boldness, and/or motion) related to the analyzed context information of the conversation are applied. In an embodiment, the processor 240 may generate an image related to the conversation, based on the generated plurality of images.

According to an embodiment of the disclosure, a method for generating an image, based on voice data, using an electronic device 101 may include converting voice data related to a conversation of a plurality of speakers into text data. According to an embodiment, the method for generating an image, based on voice data, using an electronic device 101 may include analyzing, based on the converted text data, context information of the conversation, the context information including at least one of information related to a topic of the conversation, information related to understanding of the plurality of speakers for the conversation, or information related to mood of the conversation. According to an embodiment, the method for generating an image, based on voice data, using an electronic device 101 may include generating at least one prompt, based on the analyzed context information of the conversation. According to an embodiment, the method for generating an image, based on voice data, using an electronic device 101 may include generating, based on the generated at least one prompt, a plurality of images including at least one of a first object representing the plurality of speakers or a second object representing content of the conversation. According to an embodiment, the method for generating an image, based on voice data, using an electronic device 101 may include generating an image related to the conversation, based on the generated plurality of images.

At least one prompt according to an embodiment may include a first prompt related to entire content of a conversation. The at least one prompt according to an embodiment may include a second prompt related to a summary of contents of the conversation. The at least one prompt according to an embodiment may include a third prompt related to at least one topic of a conversation.

According to an embodiment, an operation of analyzing context information of a conversation may include extracting at least one of at least one first word repeatedly detected in the conversation or at least one second word exchanged between the plurality of speakers while having different opinions on at least one topic of the conversation. According to an embodiment, the operation of analyzing context information of a conversation may include identifying, based on at least one of the at least one first word or the at least one second word, information related to the topic of the conversation.

According to an embodiment, an operation of analyzing the context information of a conversation may include extracting, based on the converted text data, at least one of at least one third word representing positive feedback, at least one fourth word representing negative feedback, or at least one fifth word representing empathic feedback with regard to at least one topic of the conversation. According to an embodiment, the operation of analyzing the context information of the conversation may include identifying, based on the at least one third word, the at least one fourth word, or the at least one fifth word, at least one of information related to understanding of the plurality of speakers for the conversation or information related to mood of the conversation.

According to an embodiment, a method for generating an image, based on voice data, using an electronic device 101 may include displaying, on a display 230, at least one item indicating the generated at least one prompt. According to an embodiment, the method for generating an image, based on voice data, using an electronic device 101 may include generating, in case that an input for selecting one of the at least one item is detected, a plurality of images related to a prompt corresponding to the selected item. According to an embodiment, the method for generating an image, based on voice data, using an electronic device 101 may include generating an image related to the prompt corresponding to the selected item, based on the generated plurality of images related to the prompt.

According to an embodiment, a method for generating an image, based on voice data, using an electronic device 101 may include identifying, based on the analyzed context information of the conversation, information related to mood of the conversation. According to an embodiment, the method for generating an image, based on voice data, using an electronic device 101 may include displaying, based on the identified information related to the mood of the conversation, at least one content to be applied to the image. According to an embodiment, the method for generating an image, based on voice data, using an electronic device 101 may include generating, in case that an input for selecting the displayed at least one content is detected, a second prompt related to the selected at least one content. According to an embodiment, the method for generating an image, based on voice data, using an electronic device 101 may include generating, based on the at least one prompt and the second prompt, a plurality of images including at least one of at least one first object representing the plurality of speakers or at least one second object representing content of the conversation.

The at least one content to be applied to the image according to an embodiment may include at least one of a template, background music, a theme, or visual effects.

According to an embodiment, a method for generating an image, based on voice data, using an electronic device 101 may include analyzing, based on the converted text data, context information of a conversation related to a user of the electronic device 101 among the plurality of speakers. According to an embodiment, the method for generating an image, based on voice data, using an electronic device 101 may include generating, based on the analyzed context information of the conversation related to the user, a plurality of images of the conversation related to the user. According to an embodiment, the method for generating an image, based on voice data, using an electronic device 101 may include generating, based on the generated plurality of images of the conversation related to the user, an image related to the conversation of the user.

According to an embodiment, a method for generating an image, based on voice data, using an electronic device 101 may include analyzing, based on the converted text data, context information of a conversation related to at least one other speaker except for the user among the plurality of speakers. According to an embodiment, the method for generating an image, based on voice data, using an electronic device 101 may include determining whether to modify the generated image related to the conversation of the user, based on the analyzed context information of the conversation related to the at least one other speaker. According to an embodiment, the method for generating an image, based on voice data, using an electronic device 101 may include generating, in case that it is determined to modify the generated image related to the conversation of the user, a plurality of images related to the at least one other speaker, based on the context information of the conversation related to the at least one other speaker. According to an embodiment, the method for generating an image, based on voice data, using an electronic device 101 may include modifying the generated image related to the conversation of the user, based on at least one image among the plurality of images of the conversation related to the user and at least one image among the plurality of images related to the at least one other speaker.

The memory 220 of the electronic device 101 according to an embodiment may include a first artificial intelligence model 221 trained to classify each speaker from voice data related to a conversation of a plurality of speakers and to convert voice data of each classified speaker into text data. The memory 220 according to an embodiment may include a second artificial intelligence model 223 trained to analyze context information based on the text data and to generate at least one prompt, based on the analyzed context information. The memory 220 according to an embodiment may include a third artificial intelligence model 225 trained to generate a plurality of images, based on the generated at least one prompt.

According to an embodiment of the disclosure, a non-transitory computer-readable medium for storing instructions which, when executed by a processor 240 of an electronic device 101, may cause the processor 240 to perform an operation of converting voice data related to a conversation of a plurality of speakers into text data. According to an embodiment, the non-transitory computer-readable medium for storing instructions which, when executed by a processor 240 of an electronic device 101, may cause the processor 240 to perform an operation of analyzing, based on the converted text data, context information of the conversation, the context information including at least one of information related to a topic of the conversation, information related to understanding of the plurality of speakers for the conversation, or information related to mood of the conversation. According to an embodiment, the non-transitory computer-readable medium for storing instructions which, when executed by a processor 240 of an electronic device 101, may cause the processor 240 to perform an operation of generating at least one prompt, based on the analyzed context information of the conversation. According to an embodiment, the non-transitory computer-readable medium for storing instructions which, when executed by a processor 240 of an electronic device 101, may cause the processor 240 to perform an operation of generating, based on the generated at least one prompt, a plurality of images including at least one of a first object representing the plurality of speakers or a second object representing content of the conversation. According to an embodiment, the non-transitory computer-readable medium for storing instructions which, when executed by a processor 240 of an electronic device 101, may cause the processor 240 to perform operation of generating an image related to the conversation, based on the generated plurality of images.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising
a processor (240); and
memory storing instructions,
wherein the instructions, when executed by the processor (240), cause the electronic device (101) to:
convert voice data related to a conversation of a plurality of speakers into text data;
analyze, based on the converted text data, context information of the conversation comprising at least one of information related to a topic of the conversation, information related to understanding of the plurality of speakers for the conversation, or information related to mood of the conversation;
generate, based on the analyzed context information of the conversation, at least one prompt;
generate, based on the generated at least one prompt, a plurality of images comprising at least one of at least one first object representing the plurality of speakers and at least one second object representing content of the conversation; and
generate an image related to the conversation, based on the generated plurality of images.

2. The electronic device (101) of claim 1, wherein the at least one prompt comprises at least one of:
a first prompt related to entire content of the conversation;
a second prompt related to a summary of contents of the conversation; or
a third prompt related to at least one topic of the conversation.

3. The electronic device (101) of claim 1 or 2, wherein the instructions, when executed by the processor (240), further cause the electronic device (101) to:
extract at least one of at least one first word repeatedly detected in the conversation or at least one second word exchanged between the plurality of speakers while having different opinions on at least one topic of the conversation;
identify, based on at least one of the at least one first word or the at least one second word, the information related to the topic of the conversation;
extract, based on the converted text data, at least one third word representing positive feedback, at least one fourth word representing negative feedback, or at least one fifth word representing empathic feedback related to the at least one topic of the conversation; and
identify, based on the at least one third word, the at least one fourth word, or the at least one fifth word, the understanding of the plurality of speakers for the conversation, or the information related to mood of the conversation.

4. The electronic device (101) of any of claims 1 to 3, further comprising a display (230),
wherein the instructions, when executed by the processor (240), further cause the electronic device (101) to:
display at least one item indicating the generated at least one prompt on the display (230);
generate, in case that an input for selecting one of the at least one item is detected, a plurality of images related to a prompt corresponding to the selected item;
and
generate an image related to the prompt corresponding to the selected item, based on the generated plurality of images related to the prompt.

5. The electronic device (101) of any of claims 1 to 4, wherein the instructions, when executed by the processor (240), further cause the electronic device (101) to:
identify, based on the analyzed context information of the conversation, the information related to mood of the conversation;
display, based on the identified information related to the mood of the conversation, at least one content to be applied to the image;
generate, in case that an input for selecting the displayed at least one content is detected, a second prompt related to the selected at least one content; and
generate, based on the at least one prompt and the second prompt, a plurality of images comprising the at least one of at least one first object representing the plurality of speakers and the at least one second object representing content of the conversation,
wherein the at least one content to be applied to the image comprises at least one of a template, a background music, a theme, or visual effects.

6. The electronic device (101) of any of claims 1 to 5, wherein the instructions, when executed by the processor (240), further cause the electronic device (101) to:
analyze, based on the converted text data, context information of a conversation related to a user of the electronic device (101) among the plurality of speakers;
generate, based on the analyzed context information of the conversation related to the user, a plurality of images of the conversation related to the user; and
generate, based on the generated plurality of images of the conversation related to the user, an image related to the conversation of the user.

7. The electronic device (101) of claim 6, wherein the instructions, when executed by the processor (240), further cause the electronic device (101) to:
analyze, based on the converted text data, context information of a conversation related to at least one other speaker except for the user among the plurality of speakers;
determine whether to modify the generated image related to the conversation of the user, based on the analyzed context information of the conversation related to the at least one other speaker;
generate, in case that it is determined to modify the generated image related to the conversation of the user, a plurality of images related to the at least one other speaker, based on the context information of the conversation related to the at least one other speaker; and
modify the generated image related to the conversation of the user, based on at least one image of the plurality of images of the conversation related to the user and at least one image among the plurality of images related to the at least one other speaker.

8. The electronic device (101) of any of claims 1 to 7,
wherein the instructions, when executed by the processor (240), further cause the electronic device (101) to:
a first artificial intelligence model (221) trained to classify each speaker from the voice data related to the conversation of the plurality of speakers, and convert the voice data of each classified speaker into text data,
a second artificial intelligence model (223) trained to analyze the context information based on the text data and generate the at least one prompt based on the analyzed context information, and
a third artificial intelligence model (225) trained to generate the plurality of images based on the generated at least one prompt.

9. A method for generating an image, based on voice data, by an electronic device (101), the method comprising:
converting voice data related to a conversation of a plurality of speakers into text data;
analyzing, based on the converted text data, context information of the conversation, the context information comprising at least one of information related to a topic of the conversation, information related to understanding of the plurality of speakers for the conversation, or information related to mood of the conversation;
generating, based on the analyzed context information of the conversation, at least one prompt;
generating, based on the generated at least one prompt, a plurality of images comprising at least one of a first object representing the plurality of speakers or a second object representing content of the conversation; and
generating an image related to the conversation, based on the generated plurality of images.

10. The method of claim 9, wherein the at least one prompt comprises at least one of:
a first prompt related to entire content of the conversation;
a second prompt related to a summary of contents of the conversation; or
a third prompt related to at least one topic of the conversation.

11. The method of claim 9 or 10, wherein the analyzing of the context information of the conversation comprises:
extracting at least one of at least one first word repeatedly detected in the conversation or at least one second word exchanged between the plurality of speakers while having different opinions on at least one topic of the conversation;
identifying, based on at least one of the at least one first word or the at least one second word, the information related to the topic of the conversation;
extracting, based on the converted text data, at least one third word representing positive feedback, at least one fourth word representing negative feedback, or at least one fifth word representing empathic feedback related to the at least one topic of the conversation; and
identifying, based on the at least one third word, the at least one fourth word, or the at least one fifth word, at least one of the information related to understanding of the plurality of speakers for the conversation or the information related to mood of the conversation.

12. The method of any of claims 9 to 11, further comprising:
displaying, on a display (230), at least one item indicating the generated at least one prompt;
generating, in case that an input for selecting one of the at least one item is detected, a plurality of images related to a prompt corresponding to the selected item;
and
generating an image related to the prompt corresponding to the selected item, based on the generated plurality of images related to the prompt.

13. The method of any of claims 9 to 12, further comprising:
identifying, based on the analyzed context information of the conversation, the information related to mood of the conversation;
displaying, based on the identified information related to the mood of the conversation, at least one content to be applied to the image;
generating, in case that an input for selecting the displayed at least one content is detected, a second prompt related to the selected at least one content; and
generating, based on the at least one prompt and the second prompt, a plurality of images including at least one of a first object representing the plurality of speakers or a second object representing content of the conversation,
wherein the at least one content to be applied to the image comprises at least one of a template, background music, a theme, or visual effects.

14. The method of any of claims 9 to 13, further comprising:
analyzing, based on the converted text data, context information of a conversation related to a user of the electronic device (101) among the plurality of speakers;
generating, based on the analyzed context information of the conversation related to the user, a plurality of images of the conversation related to the user;
generating, based on the generated plurality of images of the conversation related to the user, an image related to the conversation of the user;
analyzing, based on the converted text data, context information of a conversation related to at least one other speaker except for the user among the plurality of speakers;
determining whether to modify the generated image related to the conversation of the user, based on the analyzed context information of the conversation related to the at least one other speaker;
generating, in case that it is determined to modify the generated image related to the conversation of the user, a plurality of images related to the at least one other speaker, based on the context information of the conversation related to the at least one other speaker; and
modifying the generated image related to the conversation of the user, based on at least one image among the plurality of images of the conversation related to the user and at least one image among the plurality of images related to the at least one other speaker.

15. A non-transitory computer-readable medium storing instructions which, when executed by a processor (240) of an electronic device (101), cause the processor (240) to perform operations of:
converting voice data related to a conversation of a plurality of speakers into text data;
analyzing, based on the converted text data, context information of the conversation, the context information including at least one of information related to a topic of the conversation, information related to understanding of the plurality of speakers for the conversation, or information related to mood of the conversation;
generating at least one prompt, based on the analyzed context information of the conversation;
generating, based on the generated at least one prompt, a plurality of images including at least one of a first object representing the plurality of speakers or a second object representing content of the conversation; and
generating an image related to the conversation, based on the generated plurality of images.
